# EUROPEAN PATENT SPECIFICATION

(11) **EP 3 658 365 B1**
(45) Date of publication and mention of the grant of the patent: **07.07.2021**
(21) Application number: 18759395.9
(22) Date of filing: 24.07.2018
(51) Int. Cl.: B29D 30/26, B29D 30/36

(54) **APPARATUS FOR BUILDING A TYRE FOR VEHICLE WHEELS**
VORRICHTUNG ZUM AUFBAUEN EINES REIFENS FÜR FAHRZEUGRÄDER
APPAREIL PERMETTANT DE CONSTRUIRE UN PNEU POUR DES ROUES DE VÉHICULE

(30) Priority: 25.07.2017 IT 201700084375
(43) Date of publication of application: 03.06.2020
(73) Proprietor: Pirelli Tyre S.p.A., 20126 Milano (IT)
(72) Inventor: SANGIOVANNI, Stefano, 20126 Milano (IT); VANIGLIA, Erika, 20131 Milano (IT); MARCHINI, Maurizio, 20038 Seregno (MB) (IT)
(74) Representative: Porta & Consulenti Associati S.p.A.
(86) International application number: PCT/IB2018/055501
(87) International publication number: WO 2019/021178

(56) References cited:
- WO-A1-2008/099236
- WO-A1-2009/128046
- US-A- 3 925 141
- US-A- 4 207 133
- US-A- 4 269 649
- US-A1- 2016 144 583

## Description

The present invention relates to an apparatus for building a tyre for vehicle wheels.

More in particular, the invention relates to an apparatus used for building a green tyre, to be subsequently subjected to a moulding and vulcanisation cycle to obtain the end product.

A tyre for vehicle wheels generally comprises a carcass structure comprising at least one carcass ply formed from reinforcing cords incorporated in a matrix of elastomeric material. The carcass ply has end flaps respectively engaged with annular anchoring structures. The latter are arranged in the areas of the tyre usually identified with the name "beads" and normally are each formed from a substantially circumferential annular insert on which at least one filling insert is applied in a radially outer position. Such annular inserts are commonly identified as "bead cores" and have the function of keeping the tyre properly fixed to the anchoring seat suitably provided in the rim of the wheel, thus preventing the radially inner end flap of the tyre from coming out from such a seat during operation.

Specific reinforcing structures having the function of improving the transmission of torque to the tyre can be provided at the beads.

In "tubeless" tyres, a coating layer that is impermeable to air, usually called "liner", covers the inner surfaces of the tyre.

In a radially outer position with respect to the carcass structure a crown structure is associated.

The crown structure comprises a belt structure and, in radially outer position with respect to the belt structure, a tread band made of elastomeric material.

The belt structure comprises one or more belt layers, arranged in radial juxtaposition with respect to one another and having textile or metallic reinforcing cords having crossed-over orientation and/or substantially parallel to the direction of circumferential development of the tyre.

Between the carcass structure and the belt structure can be provided a layer of elastomeric material, called "under-belt", having the function of making the radially outer surface of the carcass structure as uniform as possible for the subsequent application of the belt structure.

Between the belt structure and the tread band it is possible to arrange a so-called "underlayer" made of elastomeric material of suitable properties for ensuring a stable union of the tread band with the belt structure.

On the side surfaces of the carcass structure are applied, each extending from one of the side edges of the tread band up to the respective annular anchoring structure to the beads, respective sidewalls made of elastomeric material.

The expression "elastomeric material" is meant to indicate a composition comprising at least one elastomeric polymer and at least one reinforcing filler. Preferably, such a composition also comprises additives like, for example, a cross-linking agent and/or a plasticiser. Thanks to the presence of the cross-linking agent, such a material can be cross-linked by heating, so as to form the manufactured end product.

The terms "radial" and "axial" are used with reference respectively to a direction parallel and perpendicular to a middle plane of a building drum on which a carcass structure of the tyre is made. The expressions "radially inner/outer" respectively indicate a position closer to or further from a rotation axis of the building drum and perpendicular to the aforementioned middle plane. The expressions "axially inner/outer" respectively indicate a position closer to and further from the aforementioned middle plane.

The terms "circumferential" and "circumferentially", on the other hand, are used with reference to the annular development of the aforementioned building drum.

The term "repeatable processes in accordance with the design specifications" is meant to indicate the possibility of building tyres that, for the same design specifications, are substantially identical to one another.

The term "radial section" is meant to indicate a section taken on a plane on which a rotation axis of the building drum lies.

Apparatuses for building tires substantially comprising a building drum configured to support a carcass structure and a shaping device configured to associate the carcass structure with at least one belt structure are well known: see for example documents US 4269649 A or US 3925141 A.

WO 2009/128046, from the same Applicant, describes a process and an apparatus for building a green tyre.

In such a document, the carcass structure and an outer sleeve comprising the belt structure and a tread band are made separately from one another respectively on a building drum and an auxiliary drum.

The outer sleeve is picked up from the auxiliary drum to be coupled with the carcass structure. The outer sleeve is for this purpose arranged coaxially around the building drum, and the carcass structure is shaped according to a toroidal configuration by moving the beads axially towards one another and simultaneously introducing pressurised fluid inside the carcass structure, so as to determine a radial expansion of the carcass structure until it is made to stick to the radially inner surface of the outer sleeve.

In order to obtain the radial expansion of the carcass structure four thrusting rings are provided, each of which is associated with a respective sealing ring.

Each thrusting ring is connected to a single drive ring pushed by fluid-dynamic actuators so as to be axially movable and contact the respective sealing ring.

Each thrusting ring is separate in the radial direction from another thrusting ring by an annular guide.

The sealing rings, respectively concentric and having different diameters, are arranged to act, through the axial thrust exerted by the respective thrusting rings, against four different, in diameter, annular anchoring structures carried on each occasion by the building drum.

Each sealing ring exerts a concentric thrusting action against the carcass plies turned around the annular anchoring structure along a radially inner circumferential edge of the annular anchoring structure.

In accordance with WO 2009/128046, such a thrusting action avoids undesired sliding of the cords that form the carcass plies due to the stresses transmitted during the shaping step. At the same time, the sealing rings perform a hermetically sealed closing function of the carcass structure at the annular anchoring structures, facilitating the radial expansion of the carcass structure.

The Applicant observes that it is necessary to obtain repeatable processes in accordance with the design specifications.

The Applicant also observes that it is necessary to obtain repeatable processes as the fitting diameter of the tyre to be built changes.

The Applicant has observed that for this purpose it is suitable, during the radial expansion of the carcass structure, to lock the carcass structure at its opposite beads in a repeatable manner and to allow an effective airtight seal along the entire circumferential development of the bead of the tyre whatever the fitting diameter of the tyre to be built is.

The Applicant has verified that in WO 2009/128046, in order to ensure the aforementioned repeatability and the desired airtight seal, each thrusting ring must be concentric with the others, axially slidable on a respective annular guide and able to abut in thrusting relationship on sealing rings having diameters that differ even by a few tens of millimetres (such diameters indeed having to correspond to the desired different fitting diameters). This means that each thrusting ring has a reduced thickness in the radial direction, for example equal to about 6 millimetres, and a large diameter, for example comprised between about 480 and about 560 millimetres.

The Applicant has noted that, due to the aforementioned dimensions (reduced thicknesses and large diameters), such thrusting rings tend to display instability of shape when subjected to the loads necessary for the axial movement thereof. In particular, the thrusting rings tend to become oval and to interact with the respective annular guides in a non-homogeneous manner along the circumferential development of each thrusting ring.

Consequently, each thrusting ring can exert a different axial thrusting action from that exerted by the other thrusting rings, such an axial thrusting action also can fail to be uniform along the entire circumferential development of each thrusting ring. It is thus possible to have a non-uniform axial thrust on the various sealing rings and along the circumferential development of each sealing ring; this could cause an imperfect air seal during the radial expansion of the carcass structure of any of the tyres to be built.

The Applicant has verified that such an imperfect air seal could come about unpredictably at areas of the beads that can change both as the fitting diameter of the tyre to be built changes and, for the same fitting diameter, between successive tyre building processes, resulting in building processes that are substantially not repeatable in accordance with the design specifications and as the fitting diameter of the tyre to be built changes.

The Applicant has perceived that in order to obtain the same airtight seal during the radial expansion of the carcass structure both as the fitting diameter of the tyre to be built changes and along the circumferential development of the bead of the tyre being built, it is necessary to ensure that the thrust exerted on the bead of the tyre to be built is as uniform as possible along the entire circumferential development of the bead whatever the fitting diameter of the tyre is.

The Applicant has finally found that the provision of a thrusting ring equipped with a plurality of annular contact portions that are concentric and correspond to the different fitting diameters of interest, in which such annular contact portions define a single continuous annular surface, allows the force exerted by the thrusting ring to be distributed over the entire aforementioned continuous annular surface. In this way, a substantially constant pressure is obtained over the entire circumferential development of the bead for any fitting diameter; this allows an effective airtight seal during the radial expansion of the carcass structure of the specific tyre that has to be to build.

The present invention therefore relates, in one aspect thereof, to an apparatus for building a tyre for vehicle wheels in accordance with claim 1.

Dependent claims 2 to 15 refer to preferred embodiments of the invention.

The Applicant deems that an apparatus according to claim 1 makes it possible to obtain an effective airtight seal at the beads of the tyre during the radial expansion of the carcass structure to obtain the coupling of such a carcass structure with a belt structure, whatever the fitting diameter of the tyre to be built is.

The invention according to the present aspect can have one or more of the following preferred features.

Preferably, the thrusting ring consists of a single body. In this way, the thrusting ring is subject little or not at all to shape instability when subjected to axial loads, since the radial dimension of the thrusting ring can be at least equal to the radial distance between the radially opposite annular contact portions, which corresponds to the difference between the greater and smaller fitting diameters of interest.

As an example, the radial dimension of the thrusting ring can be about ten centimetres (four inches), therefore allowing the thrusting ring to transfer the necessary axial loads without deforming.

Preferably, the annular contact portions extend from a radially inner end to a radially outer end of the thrusting ring.

Preferably, the annular contact portions are formed on an axially inner surface of the thrusting ring. In this way, the annular contact portions can directly face the sealing ring exerting a uniform pressure on it.

Preferably, the shaping device comprises an annular support body with which the thrusting ring is slidably associated. The annular support body supports and guides the thrusting ring during the axial translation of the latter.

Preferably, the shaping device comprises an annular driving body of the axial movement of the thrusting ring.

Preferably, said annular driving body is configured to act by thrusting against a shoulder of the thrusting ring axially opposite to the annular contact portions. In this way, the annular driving body can transmit to the thrusting ring forces directed axially that allow the thrusting ring to exert a pressure against the sealing ring.

Preferably, the annular driving body is axially movable towards and away from the annular support body.

When the annular driving body is axially approaching the annular support body, the annular driving body exerts an axial thrust on the thrusting ring that allows the thrusting ring to exert a thrust against the bead of the tyre suitable for ensuring the desired airtight seal.

When the annular driving body is axially moving away from the annular support body, the thrusting ring does not exert axial thrusts on the sealing ring.

Preferably, the shaping device comprises at least one elastic member arranged between the annular driving body and the annular support body.

Preferably, said at least one elastic member acts in contrast to the thrusting action of the annular driving body on the thrusting ring. In this way, when the annular driving body approaches the annular support body, the thrusting ring translates axially towards the bead of the tyre in formation and the elastic member compresses. The tendency of the elastic member to recover its original shape helps the annular driving body to go back away from the annular support body at the end of the thrusting action on the thrusting ring.

Preferably, the shaping device comprises at least one pin constrained to the annular driving body and to the thrusting ring. The pin transfers the thrusting action from the drive body to the thrusting ring.

Preferably, the annular support body comprises at least one linear ball bearing crossed by said pin. The linear ball bearing minimises the friction during the sliding of the pin through the annular support body.

Preferably, the shaping device comprises at least one sliding pad arranged between the thrusting ring and the annular support body.

The sliding pad allows reducing the friction between the thrusting ring and the annular support body when the thrusting ring translates axially. Such a reduction in friction, as well as reducing the force necessary for the movement of the thrusting ring, minimises possible jamming of the thrusting ring during its axial translation.

Preferably, said at least one sliding pad comprises a respective ring concentric to the thrusting ring inserted in a respective annular recess formed on a radially inner surface of the thrusting ring.

Preferably, said at least one sealing ring consists of a single sealing ring having a radial extension at least equal to the radial extension of the thrusting ring. In this way, with a single mould it is possible to make a sealing ring capable of exerting its action on all of the fitting diameters involved, simplifying the production process of the apparatus for building tyres. Moreover, with a single sealing ring it is easier to ensure the airtight seal between the sealing ring and the bead of the tyre being processed since a larger contact surface between sealing ring and bead can be used, with respect to a solution that provides for a plurality of concentric sealing rings.

Preferably, the sealing ring comprises an axially outer annular surface facing said single continuous annular surface.

Preferably, said continuous annular surface is configured to act in contact relationship with said single continuous annular surface.

Preferably, the sealing ring comprises a radially inner edge and a radially outer edge connected to the annular support body.

In this way, the sealing ring is rendered fixedly connected to the annular support body along only two circumferential edges, ensuring quick and easy mounting and dismounting operations of the sealing ring (for example during maintenance operations).

Preferably, the shaping device comprises a holding collar removably connected to the annular support body.

Preferably, the holding collar defines, in combination with the annular support body, an undercut engaged by a protuberance of the radially outer edge of the sealing ring. In this way, by removing the holding collar from the annular body it is possible to remove the sealing ring, for example to take care of its replacement or to carry out maintenance operations on the shaping device.

Preferably, the holding collar is arranged in radially outer position with respect to the thrusting ring.

Preferably, the annular support body comprises an annular groove engaged by a protuberance of the radially inner edge of the sealing ring. The annular groove of the annular support body and the protuberance of the radially inner edge of the sealing ring ensure that the sealing ring is stably held in position during use.

Preferably, the annular groove is arranged in radially inner position with respect to the holding collar.

Preferably, said thrusting ring comprises four radially consecutive annular contact portions.

In first embodiments, the radial distance between a first pair of consecutive annular contact portions is greater than the radial distance between any other pair of consecutive annular contact portions. In this way, it is possible to use such a thrusting ring for fitting diameters in which the difference between consecutive fitting diameters is not constant. It is for example possible to use such a thrusting ring for non-consecutive fitting diameters, like for example respectively of 48.3, 50.8, 53.3, 58.4 centimetres (19, 20, 21 and 23 inches).

In alternative embodiments, said thrusting ring preferably comprises four radially consecutive annular contact portions, in which the radial distance between one pair of radially consecutive annular contact portions is equal to the radial distance between any other pair of radially consecutive annular contact portions. It is for example possible to use such a thrusting ring for consecutive fitting diameters respectively of 50.8, 53.3,56, 58.4 centimetres (20, 21, 22, 23 inches).

Preferably, said sealing ring comprises an axially inner annular surface that develops according to a substantially frusto-conical surface. Such a solution is particularly preferred in the case in which the thrusting ring is that of the aforementioned alternative embodiments.

Alternatively, said sealing ring preferably comprises an axially inner annular surface that develops according to two substantially frusto-conical surfaces joined together by an annular joining surface. Such a solution is particularly preferred in the case in which the thrusting ring is that of the aforementioned first embodiments.

Preferably, said annular joining surface is arranged at an annular portion of the thrusting ring defined between two annular contact portions of the thrusting ring.

Further characteristics and advantages of the present invention will become clearer from the following detailed description of preferred embodiments thereof, made with reference to the attached drawings.

In such drawings:
- figure 1 schematically shows a top view of an apparatus for building a tyre for vehicle wheels in accordance with the present invention;
- figure 2 schematically shows a radial section view of a shaping device of the apparatus of figure 1 in a first operative configuration;
- figure 3 shows a detail of the shaping device of figure 2;
- figure 4 shows the shaping device of figure 3 in a second operative configuration;
- figure 5 shows the shaping device of figure 4 in a different radial section; and
- figure 6 shows a variant embodiment of some details of the shaping device of figure 2.

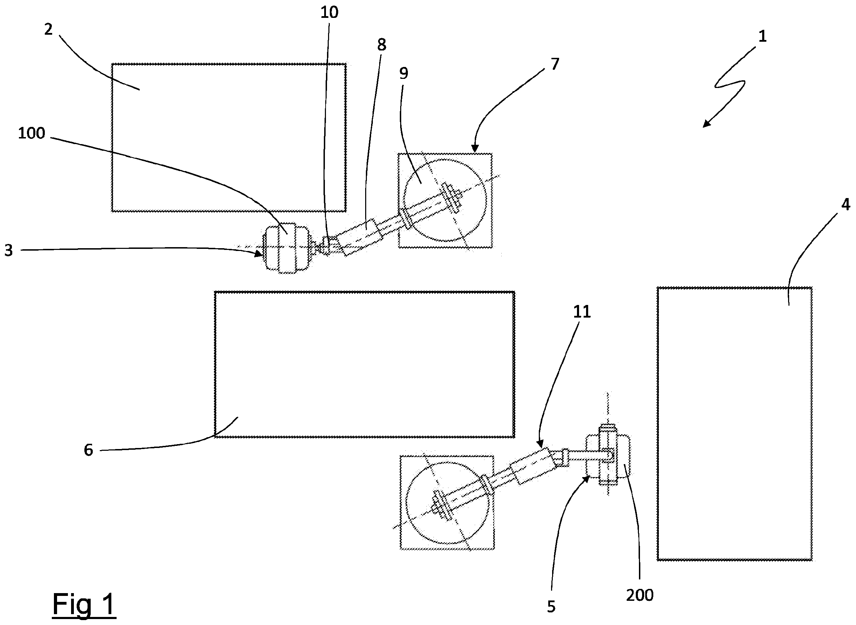

With reference to figure 1, reference numeral 1 wholly indicates an apparatus for building a tyre for vehicle wheels in accordance with the present invention.

The apparatus 1 comprises a building line of carcass structures 2 at which one or more building drums 3 are moved between different work stations (not illustrated).

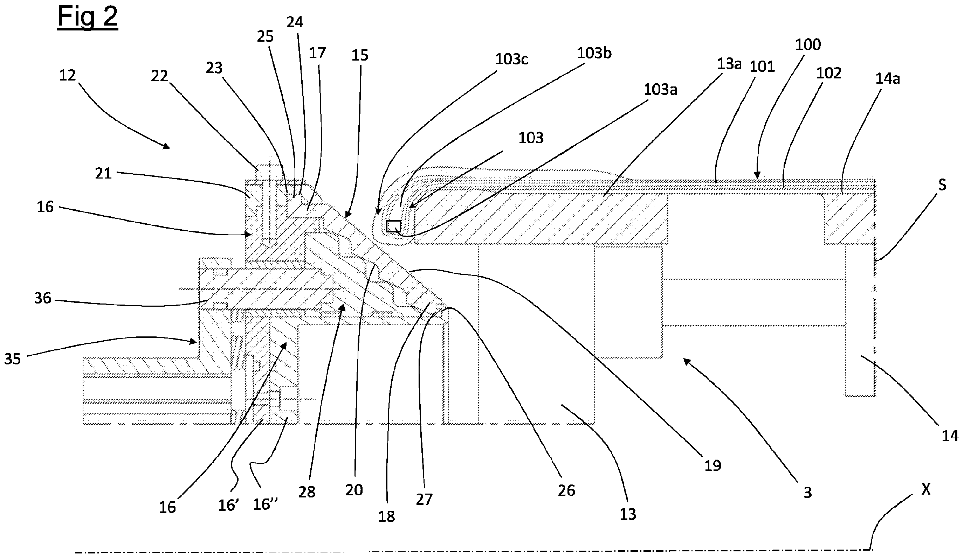

The work stations are configured to form a carcass structure 100 on each building drum 3 (figure 2).

The carcass structure 100 comprises at least one carcass ply 101 that, preferably, is internally coated with a layer of impermeable elastomeric material 102, so-called liner. The carcass structure 100 also comprises two annular anchoring structures 103. The two annular anchoring structures 103 each comprise a so-called bead core 103a preferably carrying, in radially outer position, an elastomeric filler 103b. The two annular anchoring structures 103 are engaged in respective end edges of the carcass ply(-ies) 101 and are integrated in areas 103c usually identified by the name beads. At the beads the engagement between the tyre and the rim of the vehicle usually takes place, according to a fitting diameter determined by the diameter dimensions of the rim and of the annular anchoring structures 103. The carcass structure 100 can also comprise at least one part of the sidewalls 104.

As schematically illustrated in figure 1, the apparatus 1 also comprises a building line of crown structures 4 at which one or more auxiliary drums 5 are moved between different work stations (not illustrated).

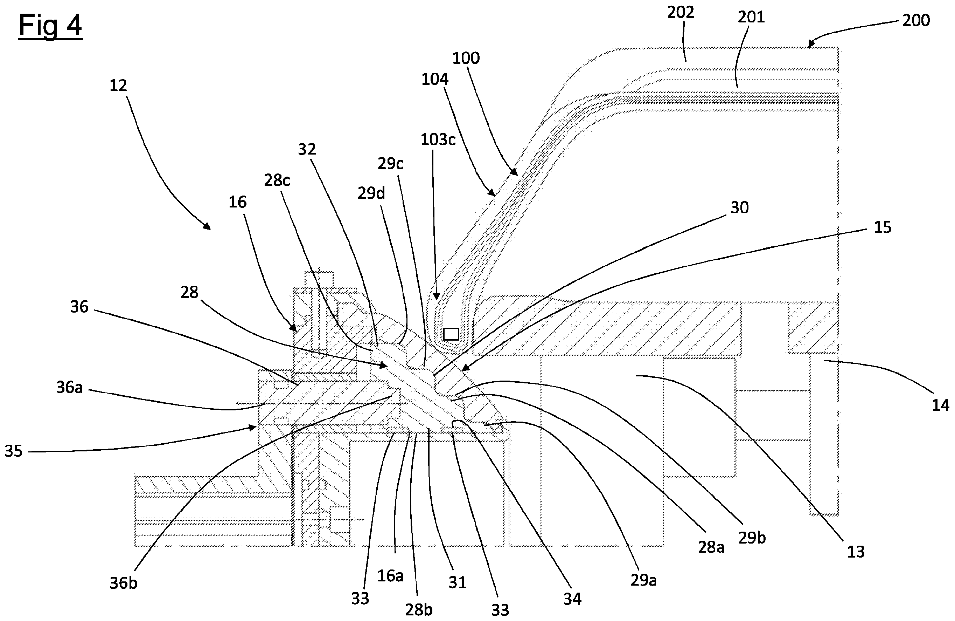

The work stations are configured to form, on each auxiliary drum 5, a crown structure 200 (figure 4) comprising a belt structure 201 and, preferably, a tread band 202 radially outer with respect to the belt structure 201. The crown structure 200 can possibly comprise a part of the sidewalls 104.

The apparatus 1 also comprises an assembly station 6 at which the crown structure 200 is removed from the auxiliary drum 5 to be coupled with the carcass structure 100 formed on the building drum 3.

Concerning this, a first transfer unit 7 acts on the building drum 3 to transfer it from the building line of carcass structures 2 to the assembly station 6. The first transfer unit 7 preferably comprises a robotised arm 8 of an anthropomorphous robot 9 having six or more movement axes. The anthropomorphous robot 9 comprises a head 10 able to be operatively coupled with the building drum 3 and carried by the robotised arm 8.

A second transfer unit 11 acts on the auxiliary drum 5 to transfer the auxiliary drum 5 from the building line of crown structures 4 to the assembly station 6.

The association of the carcass structure 100 with the crown structure 200 takes place in the assembly station 6 at the building drum 3.

In particular, the crown structure 200 is carried by the second transfer unit 11 in radially outer position with respect to the carcass structure 100 supported by the building drum 3, on which it has been formed and lies, so that the crown structure 200 is substantially axially centred with respect to the carcass structure 100.

In the illustrated example, the building drum 3 is symmetrical with respect to a middle plane S represented in figure 2 and comprises two lateral annular parts 13 (only one of which is illustrated in figures 2 to 6) arranged on axially opposite sides with respect to a central annular part 14.

The two lateral annular parts 13 and the central annular part 14 comprise respective circumferential sectors radially movable between an extraction condition (not illustrated) and a work condition (illustrated in figures 2, 4-6). In the extraction condition, the circumferential sectors are radially brought towards a rotation axis X of the building drum 3 to give the building drum 3 a smaller radial bulk than the fitting diameter of the tyre being processed and allow the extraction of the tyre from the building drum 3 itself after the crown structure 200 has been associated with the carcass structure 100. In the work condition, the circumferential sectors are radially moved away from the rotation axis X of the building drum 3 to give the building drum 3 a radial bulk substantially equal to the fitting diameter of the tyre being processed.

Both in the extraction condition and in the work condition, the radially outer surfaces 13a, 14a of the lateral annular parts 13 and of the central annular part 14 are axially aligned, in other words they lie on a common circumference.

The two lateral annular parts 13 of the building drum 3 are axially movable between an approached condition in which the axial distance between the two lateral annular parts 13 is minimum (as illustrated in figures 4, 5 and 6) and a far apart condition in which the axial distance between the two lateral annular parts 13 is greater (as illustrated in figure 2).

The central annular part 14 does not move in the axial direction with respect to the two lateral annular parts 13.

The two lateral annular parts 13 move in the axial direction translating simultaneously together or apart with respect to the central annular part 14.

The apart condition of the two lateral annular parts 13 of the building drum 3 is adopted in the step of making the carcass structure 100 whereas the close together condition of the two lateral annular parts 13 of the building drum 3 is adopted during the association of the crown structure 200 with the carcass structure 100.

In order to be able to associate the carcass structure 100 with the crown structure 200, the assembly station 6 comprises two shaping devices 12 (only one of which is illustrated in figures 2, 4, 5 and 6) arranged on axially opposite sides with respect to the building drum 3 when the latter is in the assembly station 6 and in the work condition, as represented in figure 2, 4, 5 and 6.

The shaping devices 12 are axially movable between a rest configuration (illustrated in figure 2) in which the shaping devices 12 are brought into abutment against the carcass structure 100 (in particular against the beads 103c) supported by the building drum 3 and the lateral annular parts 13 of the latter are in the apart condition, and an operative configuration (illustrated in figures 4, 5 and 6) in which the shaping devices 12 remain in abutment against the carcass structure 100 (in particular against the beads 103c) supported by the building drum 3 and the lateral annular parts 13 of the building drum 3 are in the close together condition.

In particular, the shaping devices 12 are respectively arranged at the axial ends of the building drum 3 and are configured to shape the carcass structure 100 according to a toroidal configuration (as illustrated in figures 4 to 6) so as to determine the contact thereof against a radially inner surface of the crown structure 200 and make the coupling between carcass structure 100 and crown structure 200.

For this purpose, inflation members (not illustrated) are foreseen preferably comprising a pneumatic circuit the places a work fluid source in communication with a radially inner surface of the carcass structure 100.

The supply of pressurised work fluid in the carcass structure 100 determines the inflation thereof contributing to obtaining the quoted toroidal configuration.

Each shaping device 12 is configured to couple with the axial end of the carcass structure 100, in particular with bead 103c carrying the annular anchoring structure 103, during the inflation of the carcass structure 100.

Concerning this, each shaping device 12 comprises a sealing ring 15 configured to act in contact and thrusting relationship against the entire circumferential development of the bead 103c.

The sealing ring 15 is supported by an annular support body 16 that in the example illustrated here is defined by two annular parts 16', 16" fixedly connected to one another.

The annular support body 16 is axially movable between a rest position (illustrated in figure 2, in which the shaping device 12 is in the aforementioned rest configuration) and an operative position (illustrated in figures 4, 5 and 6, in which the shaping device 12 is in the aforementioned operative configuration).

The sealing ring 15 is made of elastomeric material, so that, when stressed by the thrust exerted by a thrusting ring 28 described below, the sealing ring 15 can elastically deform (locally in the contact area) to obtain a secure contact with the bead 103c.

The sealing ring 15 is made in a single body that extends from a radially inner edge 18 to a radially outer edge 17 and that comprises an axially inner annular surface 19 and an axially outer annular surface 20.

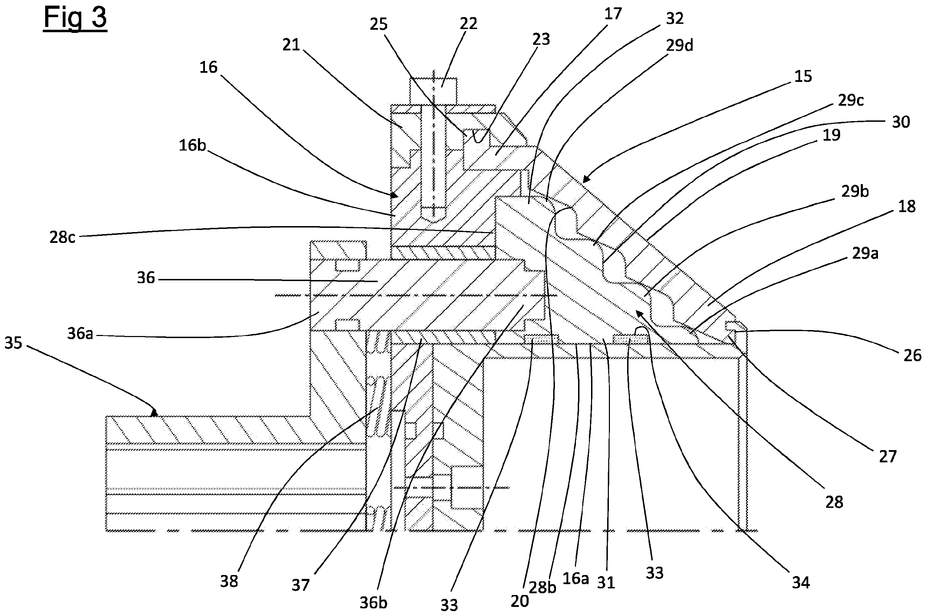

As better represented in figure 3, the radially inner edge 18 is axially more inner with respect to the radially outer edge 17.

The distance measured in the radial direction between the radially inner edge 18 and the radially outer edge 17 is at least equal to the difference between the maximum and minimum fitting radii of the tyres of interest that can, alternately (in other words one at a time), be built by the apparatus 1.

Figures 2 to 5 show a sealing ring 15 in which the distance measured in the radial direction between the radially outer edge 17 and the radially inner edge 18 of the sealing ring 15 is such as to allow, alternately, the building of tyres having four mutually consecutive fitting diameters.

As an example, such four consecutive fitting diameters can be of 48.3, 50.8, 53.3, 56 centimetres ( 19, 20, 21 and 22 inches) or of 50.8, 53.3, 56, 58.4 centimetres (20, 21, 22 and 23 inches).

In the sealing ring 15 illustrated in figures 2 to 5 the axially inner annular surface 19 defines a continuous surface without points or areas of discontinuity.

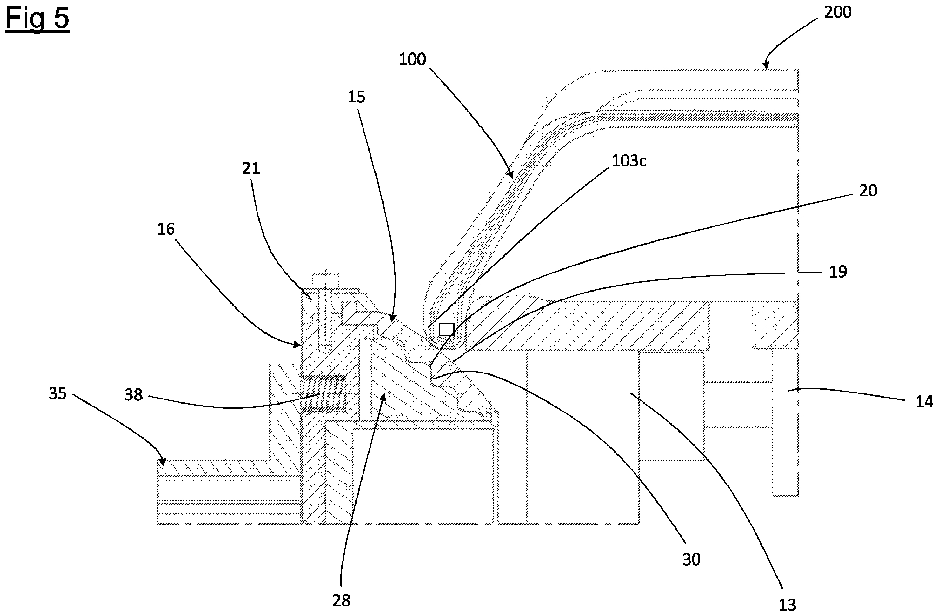

When the sealing ring 15 is not deformed by the thrusting action exerted by the thrusting ring 28 the axially inner annular surface 19 has a substantially frusto-conical development with substantially rectilinear generatrix (figures 2 and 3), whereas when the sealing ring 15 is deformed by the thrusting action exerted by the thrusting ring 28 the axially inner annular surface 19 has a substantially frusto-conical development with non-rectilinear generatrix (figures 4 and 5).

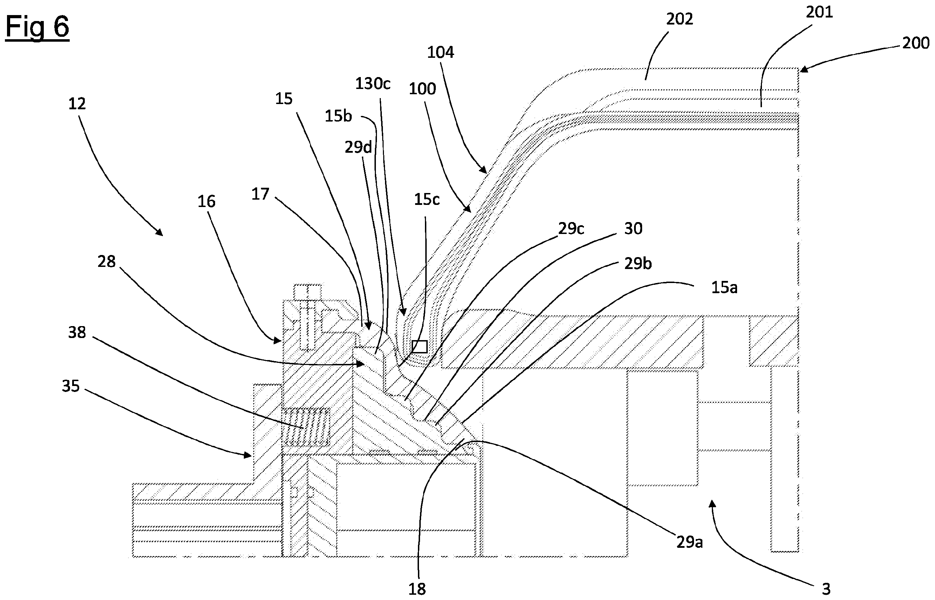

In a variant embodiment of the sealing ring 15, illustrated in figure 6, the sealing ring 15 has a distance measured in the radial direction between the radially inner edge 18 and the radially outer edge 17 such as to allow, alternately, the building of tyres having four non-mutually consecutive fitting diameters.

As an example, such four non-consecutive fitting diameters can be of 48.3, 50.8, 53.3, 58.4 centimetres ( 19, 20, 21 and 23 inches) or of 50.8, 53.3, 56, 61 centimetres (20, 21, 22 and 24 inches).

In the sealing ring 15 illustrated in figure 6, the axially inner annular surface 19 develops according to two surfaces, radially inner 15a and radially outer 15b respectively, which are substantially frusto-conical, joined together by an annular joining surface 15c.

Figures 4, 5 and 6 as an example and in deliberately exaggerated form show a possible shape taken up by the respective sealing rings 15 following the deformation imposed by the axial thrust exerted by the thrusting ring 28. In reality, the shape taken up by the aforementioned sealing rings 15 when deformed by also be very different from that illustrated in figures 4-6. For example, the shape taken up by the aforementioned sealing rings 15 can have deformations similar to localised protuberances so as to make the contact surface minimal, improving the seal.

In all of the variant embodiments of the sealing ring 15, the radially outer edge 17 and the radially inner edge 18 of the sealing ring 15 are connected to the annular support body 16.

In particular, as better illustrated in figures 2 and 3, a holding collar 21 is removably connected to the annular support body 16, at a radially outer portion 16b thereof, preferably through bolts 22 that, screwing into holes made in the annular support body 16, constrain the holding collar 21 in radially outer position to the annular support body 16.

The bolts 22 are arranged circumferentially along the holding collar 21 so as to ensure a firm mechanical seal of the holding collar 21 on the annular support body 16.

The holding collar 21 is preferably made from many side-by-side annular sectors to make a closed ring.

The holding collar 21 comprises an annular throat 23 which, in combination with the annular support body 16, defines an undercut 24.

The undercut 24 houses a protuberance 25 of the radially outer edge 17 of the sealing ring 15, locking the radially outer edge 17 between the holding collar 21 and the annular support body 16.

In radially inner position, the annular support body 16 comprises an annular groove 26 facing in the axially outer direction.

The annular groove 26 is engaged by a protuberance 27 of the radially inner edge 18 of the sealing ring 15, so that the radially inner edge 18 is held by the annular support body 16 when the sealing ring 15 is thrusted axially by the thrusting ring 28.

By removing the holding collar 21 it is possible to release the radially outer edge 17 of the sealing ring 15 from the annular support body 16 and, subsequently, to remove the protuberance 27 of the radially inner edge 18 from the annular groove 26 of the annular sealing body 16 and thus remove the sealing ring 15 (for example to carry out the replacement thereof or to carry out maintenance on it).

As illustrated in figures 4, 5 and 6, when the annular support body 16 is in the aforementioned operative position (and the building drum 3 is in the aforementioned work condition), the sealing ring 15 is in contact relationship and thrusted against the bead 103c at the bead core 103a of the annular anchoring structure 103.

In order to ensure a fluid-tight seal between the sealing ring 15 and the bead 103c, so as to be able to carry out the inflation of the carcass structure 100 without there being leaks of work fluid between the carcass structure 100 and the sealing ring 15, the shaping device 12 comprises a thrusting ring 28.

The thrusting ring 28 is configured to act by thrusting on the sealing ring 15, in particular on the axially outer annular surface 20 of the sealing ring 15, so that the sealing ring 15 exerts a pressure on the bead 103c capable of ensuring the desired fluid-tight seal.

The thrusting ring 28 is movable between a thrusting condition (illustrated in figures 4 to 6) in which it is in axially approached relationship to the sealing ring 15 and exerts a pressure on the latter and a rest condition in which it is in axially separated relationship from the sealing ring 15 and does not exert any pressure on the latter.

In the rest condition, the thrusting ring 28 can in any case contact the thrusting ring 15 without however exerting any pressure on it (as illustrated in figures 2 and 3).

When the thrusting ring 28 is in the thrusting condition, the inflation of the carcass structure 100 can be carried out since the sealing ring 15 ensures an optimal fluid-tight seal along the circumferential development of the bead 103c.

When the thrusting ring 28 is in the rest condition, the sealing ring 15 is only in contact relationship with the bead 103c, therefore in a condition not suitable for shaping the carcass structure 100.

With reference to figure 3, the thrusting ring 28 comprises a plurality of annular contact portions 29a-29d with the sealing ring 15 that are concentric and correspond to different fitting diameters of the tyre.

The annular contact portions 29a-29d define a single continuous annular surface 30.

The annular contact portions 29a-29d and the continuous annular surface 30 defined by them are arranged at an axially inner end 28a of the thrusting ring 28, so as to directly face the sealing ring 15.

In particular, the annular contact portions 29a-29d are active on the axially outer annular surface 20 of the sealing ring 15, as illustrated in figure 4.

The continuous annular surface 30 can have flexing points, in which there is a change of curvature or of convexity of the surface. However, preferably the continuous annular surface 30 does not have points that can create sharp edges that are potentially harmful to the structural integrity of the sealing ring 15.

The profile of the continuous annular surface 30 is a stepped profile, in other words a profile that has steps the edges of which (rounded so as not to create sharp edges) define the annular contact portions 29a-29d.

The axially outer annular surface 20 of the sealing ring 15 is preferably substantially counter-shaped to the continuous annular surface 30 of the thrusting ring 28. In other words, the profile of the axially outer annular surface 20 of the sealing ring 15 is also a stepped profile having steps with respective edges arranged at the edges of the continuous annular surface 30 of the thrusting ring 28.

The continuous annular surface 30 extends continuously from a radially inner end 31 to a radially outer end 32 of the thrusting ring 28.

The extension in the radial direction of the thrusting ring 28 is shorter than the extension in the radial direction of the sealing ring 15, as illustrated in figures 2 to 6.

In particular, the radially inner end 31 of the thrusting ring 28 is substantially radially aligned with the radially inner edge 18 of the sealing ring 15.

The radially outer end 32 of the thrusting ring 28 is radially more inner than the radially outer edge 17 of the sealing ring 15.

The number of annular contact portions 29a-29d is equal to the number of different fitting diameters of the tyres that, alternately, can be built.

Preferably, the number of annular contact portions 29a-29d is four.

The four annular contact portions 29a, 29b, 29c, 29d are radially spaced apart by an amount substantially equal to the difference between the fitting radii of the tyres that, alternately, can be built.

In particular, the radial distance between a first 29a and a second 29b annular contact portion is substantially equal to the difference (in absolute value) between the fitting radii of a first tyre of smaller fitting (among all of the fittings allowed) and of a second tyre of immediately greater fitting than that of the first tyre that, alternately, can be built.

The radial distance between the second 29b and the third 29c annular contact portion 29c is substantially equal to the difference (in absolute value) between the fitting radii of the second tyre and of a third tyre of immediately greater fitting than that of the second tyre that, alternately, can be built.

The radial distance between the third 29c and the fourth 29d annular contact portion is substantially equal to the difference (in absolute value) between the fitting radii of the third tyre and of a fourth tyre of immediately greater fitting than that of the third tyre that, alternately, can be built.

In this way, by suitably selecting the radial distances between the annular contact portions 29a-29d it is possible to build tyres with consecutive fitting diameters or tyres with non-consecutive fitting diameters.

In the examples of figures 2 to 5, the radial distance between a pair of radially consecutive annular contact portions 29a-29d is equal to the radial distance between any other pair of radially consecutive annular contact portions 29a-29d, allowing, alternately, the building of tyres having consecutive fitting diameter, for example of 48.3, 50.8, 53.3, 56 centimetres (19, 20, 21 and 22 inches) or of 50.8, 53.3, 56, 58.4 centimetres ( 20, 21, 22, 23 inches).

In the example of figure 6, the radial distance between a first pair of radially consecutive annular contact portions 29a-29d, for example between the third 29c and the fourth 29d annular contact portion, is greater than the radial distance between any other pair of radially consecutive annular contact portions 29a-29c, allowing, alternately, the building of tyres having non-consecutive fitting diameter, for example of 48.3, 50.8, 53.3, 58.4 centimetres (19, 20, 21 and 23 inches or of 50.8, 53.3, 56, 61 centimetres (20, 21, 22, 24 inches).

As illustrated in figures 2-6, the thrusting ring 28 consists of a single body.

Preferably, the thrusting ring 28 is made of metallic material, for example steel.

The thrusting ring 28 is slidably mounted on the annular support body 16, so as to be able to translate in the axial direction between the rest condition and the thrusted condition and vice-versa.

Concerning this, as illustrated in figures 3 and 4, at least one sliding pad 33, preferably two sliding pads 33, are arranged between the annular support body 16 and the thrusting ring 28.

Each sliding pad 33 is preferably made from a ring concentric with the thrusting ring 28 inserted in an annular recess 34 provided on the radially inner surface 28b of the thrusting ring 28.

The radially inner surface 28b of the thrusting ring 28 is substantially cylindrical and directly faces a cylindrical wall 16a of the annular support body 16.

The sliding pads 33 are made of or coated with low friction coefficient material, like for example PTFE or similar materials, and rest on the cylindrical wall 16a of the annular support body 16.

With particular reference to figure 3, the movement of the thrusting ring 28 between the thrusting condition and the rest condition and vice-versa is carried out by an annular driving body 35 active on a shoulder 28c of the thrusting ring 28 axially opposite to the annular contact portions 29.

The shoulder 28c is made from an annular wall substantially perpendicular to the cylindrical wall 16a of the annular support body 16 and to the radially inner surface 28b of the thrusting ring 28.

The annular driving body 35 is movable axially towards and away from the annular support body 16 and is actuated by actuators (not illustrated) of the pneumatic, hydraulic or electric type.

In particular, when the annular driving body 36 is axially approaching the annular support body 16, the thrusting ring 28 is in the thrusting condition and exerts a pressure on the sealing ring 15 ensuring a close contact and an excellent fluid-tight seal between the latter and the bead 103c of the tyre.

When the annular driving body 36 is axially moving away from the annular support body 16, the thrusting ring 28 is in the rest condition.

The annular driving body 35 is arranged axially externally with respect to the annular support body 16 and is mechanically connected to the thrusting ring 28 through a plurality of pins 36.

Each pin 36 comprises a first axial end 36a constrained to the annular driving body 35 and a second axial end 36b constrained to the thrusting ring 28.

Each pin 36 crosses an axially outer wall 16b of the annular support body 16 slidably engaging a linear ball bearing 37 (figure 3). The linear ball bearing 37 extends axially for the entire thickness of the axially outer wall 16b of the annular support body 16, so as to prevent the pin 36 being able to slide against the annular support body 16 during the actuation of the annular driving body 35.

The pins 36 are foreseen in a number of at least three, arranged circumferentially equidistant on the annular driving body 35, so as to ensure a uniformly distributed thrust along the entire circumferential development of the thrusting ring 28.

Preferably, there are at least seven pins 36, even more preferably sixteen pins 36, arranged circumferentially on the annular driving body 35.

Between the axially outer wall 16b of the annular support body 16 and the annular driving body 35 there is a plurality of elastic members 38 (figure 3).

The elastic members 38 act in contrast to the thrusting action of the annular driving body 35 on the thrusting ring 28.

When the thrusting action of the annular driving body 35 on the thrusting ring 28 is interrupted, the elastic members 38 take the annular driving body 35 axially away from the annular support body 16 (or assist the actuators active on the annular driving body 35 in taking it axially away from the annular support body 16).

The elastic members 38 are preferably linear springs.

The number of elastic members 38 is preferably equal to the number of pins 36. The elastic members 38 are arranged circumferentially on the annular driving body 35 and are, preferably, interspersed with the pins 36.

The present invention has been described with reference to some preferred embodiments. Different modifications can be made to the embodiments described above, while still remaining within the scope of protection of the invention, defined by the following claims.

## Claims

1. Apparatus (1) for building a tyre for vehicle wheels, comprising a building drum (3) configured to support a carcass structure (100) and a shaping device (12) configured to associate the carcass structure (100) with at least one belt structure (201), wherein the shaping device (12) comprises a thrusting ring (28) movable in an axial approaching relationship to the building drum (3) and at least one sealing ring (15) associated with said thrusting ring (28) and configured to act by thrusting against a bead (103c) of said carcass structure (100), wherein said thrusting ring (28) comprises a plurality of annular contact portions (29a-29d) with said at least one sealing ring (15) that are concentric and correspond to different fitting diameters of the tyre being processed, said annular contact portions (29a-29d) defining a single continuous annular surface (30).

2. Apparatus (1) according to claim 1, wherein the thrusting ring (28) consists of a single body.

3. Apparatus (1) according to claim 1 or 2, wherein the annular contact portions (29a-29d) extend from a radially inner end (31) to a radially outer end (32) of the thrusting ring (28).

4. Apparatus (1) according to claim 3, wherein the annular contact portions (29a-29d) are formed on an axially inner surface (28a) of the thrusting ring (28).

5. Apparatus (1) according to any one of the previous claims, wherein the shaping device (12) comprises an annular support body (16) with which the thrusting ring (28) is slidably associated.

6. Apparatus (1) according to any one of the previous claims, wherein the shaping device (12) comprises an annular driving body (35) for the axial movement of the thrusting ring (28), said annular driving body (35) being configured to act by thrusting against a shoulder (28c) of the thrusting ring (28) axially opposite to the annular contact portions (29a-29d).

7. Apparatus (1) according to claim 6 when dependent on claim 5, wherein the annular driving body (35) is axially movable towards and away from the annular support body (16) and wherein, optionally, the shaping device (12) comprises at least one elastic member (38) arranged between the annular driving body (35) and the annular support body (16) and acting in contrast to the thrusting action of the annular driving body (35) on the thrusting ring (28).

8. Apparatus (1) according to any one of claims 5 to 7, wherein the shaping device (12) comprises at least one pin (36) constrained to the annular driving body (35) and to the thrusting ring (28), wherein, optionally, the annular support body (16) comprises at least one linear ball bearing (37) crossed by said pin (36).

9. Apparatus (1) according to any one of claims 5 to 8, wherein the shaping device (12) comprising at least one sliding pad (33) arranged between the thrusting ring (28) and the annular support body (16).

10. Apparatus (1) according to claim 9, wherein said at least one sliding pad (33) comprises a respective ring concentric to the thrusting ring (28) inserted in a respective annular recess (34) formed on a radially inner surface (28b) of the thrusting ring (28).

11. Apparatus (1) according to any one of the previous claims, wherein said at least one sealing ring (15) consists of a single sealing ring (15) having a radial extension at least equal to the radial extension of the thrusting ring (28).

12. Apparatus (1) according to claim 11, wherein the sealing ring (15) comprises an axially outer annular surface (20) facing said single continuous annular surface (30) and configured to act in a contact relationship with said single continuous annular surface (30).

13. Apparatus (1) according to any one of the previous claims, wherein said thrusting ring (28) comprises four radially consecutive annular contact portions (29a, 29b, 29c, 29d), wherein the radial distance between a first pair of consecutive annular contact portions is greater than the radial distance between any other pair of consecutive annular contact portions.

14. Apparatus (1) according to any one of claims 1 to 12, wherein said thrusting ring (28) comprises four radially consecutive annular contact portions (29a, 29b, 29c, 29d), wherein the radial distance between a pair of radially consecutive annular contact portions is equal to the radial distance between any other pair of radially consecutive annular contact portions.

15. Apparatus (1) according to claims 11 and 14, wherein said sealing ring (15) comprises an axially inner annular surface (19) that extends according to a substantially frusto-conical surface.

## Patentansprüche

1. Vorrichtung (1) zur Herstellung eines Reifens für Fahrzeugräder, umfassend eine Fertigungstrommel (3), die dazu ausgestaltet ist, eine Karkassenstruktur (100) zu tragen, und eine Formungseinrichtung (12), die dazu ausgestaltet ist, die Karkassenstruktur (100) zumindest einer Gürtelstruktur (201) zuzuordnen, wobei die Formungseinrichtung (12) einen Schubring (28), der in einer sich axial annähernden Beziehung zu der Fertigungstrommel (3) beweglich ist, und zumindest einen Dichtungsring (15) umfasst, der dem Schubring (28) zugeordnet und dazu ausgestaltet ist, durch Schub gegen einen Wulst (103c) der Karkassenstruktur (100) zu wirken, wobei der Schubring (28) eine Vielzahl von ringförmigen Kontaktabschnitten (29a - 29d) mit dem zumindest einen Dichtungsring (15) umfasst, die konzentrisch sind und verschiedenen Passdurchmessern des in Bearbeitung befindlichen Reifens entsprechen, wobei die ringförmigen Kontaktaschnitte (29a - 29d) eine einzelne durchgehende ringförmige Oberfläche (30) definieren.

2. Vorrichtung (1) nach Anspruch 1, wobei der Schubring (28) aus einem einzelnen Körper besteht.

3. Vorrichtung (1) nach Anspruch 1 oder 2, wobei die ringförmigen Kontaktabschnitte (29a - 29d) sich von einem radial inneren Ende (31) bis zu einem radial äußeren Ende (32) des Schubrings (28) erstrecken.

4. Vorrichtung (1) nach Anspruch 3, wobei die ringförmigen Kontaktabschnitte (29a - 29d) an einer axial inneren Oberfläche (28a) des Schubrings (28) gebildet sind.

5. Vorrichtung (1) nach einem der vorhergehenden Ansprüche, wobei die Formungseinrichtung (12) einen ringförmigen Trägerkörper (16) umfasst, dem der Schubring (28) verschiebbar zugeordnet ist.

6. Vorrichtung (1) nach einem der vorhergehenden Ansprüche, wobei die Formungseinrichtung (12) einen ringförmigen Antriebskörper (35) für die axiale Bewegung des Schubrings (28) umfasst, wobei der ringförmigen Antriebskörper (35) dazu ausgestaltet ist, durch Schub gegen eine Schulter (28c) des Schubrings (28) axial gegenüber den ringförmigen Kontaktabschnitten (29a - 29d) zu wirken.

7. Vorrichtung (1) nach Anspruch 6, sofern abhängig von Anspruch 5, wobei der ringförmige Antriebskörper (35) axial zu dem ringförmigen Trägerkörper (16) hin und davon weg beweglich ist, und wobei optional die Formungseinrichtung (12) zumindest ein elastisches Glied (38) umfasst, das zwischen dem ringförmigen Antriebskörper (35) und dem ringförmigen Trägerkörper (16) angeordnet ist und gegen die Schubwirkung des ringförmigen Antriebskörpers (35) auf den Schubring (28) wirkt.

8. Vorrichtung (1) nach einem der Ansprüche 5 bis 7, wobei die Formungseinrichtung (12) zumindest einen Zapfen (36) umfasst, der dem ringförmigen Antriebskörper (35) und dem Schubring (28) fest zugeordnet ist, wobei optional der ringförmige Trägerkörper (16) zumindest ein Linearkugellager (37) umfasst, das von dem Zapfen (36) gekreuzt wird.

9. Vorrichtung (1) nach einem der Ansprüche 5 bis 8, wobei die Formungseinrichtung (12) zumindest ein Gleitkissen (33) umfasst, das zwischen dem Schubring (28) und dem ringförmigen Trägerkörper (16) angeordnet ist.

10. Vorrichtung (1) nach Anspruch 9, wobei das zumindest eine Gleitkissen (33) einen jeweiligen mit dem Schubring (28) konzentrischen Ring umfasst, der in eine jeweilige ringförmige Ausnehmung (34) eingesetzt ist, die an einer radial inneren Oberfläche (28b) des Schubrings (28) angeordnet ist.

11. Vorrichtung (1) nach einem der vorhergehenden Ansprüche, wobei der zumindest eine Dichtungsring (15) aus einem einzelnen Dichtungsring (15) besteht, der eine radiale Erstreckung zumindest gleich der radialen Erstreckung des Schubrings (28) aufweist.

12. Vorrichtung (1) nach Anspruch 11, wobei der Dichtungsring (15) eine axial äußere ringförmige Oberfläche (20) umfasst, die der einzelnen durchgehenden ringförmigen Oberfläche (30) zugewandt und dazu ausgestaltet ist, in einer Kontaktbeziehung mit der durchgehenden ringförmigen Oberfläche (30) zu wirken.

13. Vorrichtung (1) nach einem der vorhergehenden Ansprüche, wobei der Schubring (28) vier radial aufeinanderfolgende ringförmige Kontaktabschnitte (29a, 29b, 29c, 29d) umfasst, wobei der radiale Abstand zwischen einem ersten Paar von aufeinanderfolgenden ringförmigen Kontaktabschnitten größer ist als der radiale Abstand zwischen jedem anderen Paar von aufeinanderfolgenden ringförmigen Kontaktabschnitten.

14. Vorrichtung (1) nach einem der vorhergehenden Ansprüche 1 bis 12, wobei der Schubring (28) vier radial aufeinanderfolgende ringförmige Kontaktabschnitte (29a, 29b, 29c, 29d) umfasst, wobei der radiale Abstand zwischen einem Paar von radial aufeinanderfolgenden ringförmigen Kontaktabschnitten größer ist als der radiale Abstand zwischen jedem anderen Paar von radial aufeinanderfolgenden ringförmigen Kontaktabschnitten.

15. Vorrichtung (1) nach den Ansprüchen 11 und 14, wobei der Dichtungsring (15) eine axial innere ringförmige Oberfläche (19) umfasst, die sich gemäß einer Wesentlichen kegelstumpfförmigen Oberfläche erstreckt.

## Revendications

1. Appareil (1) de construction d'un pneu pour roues de véhicule, comprenant un tambour de construction (3) configuré pour supporter une structure de carcasse (100) et un dispositif de mise en forme (12) configuré pour associer la structure de carcasse (100) à au moins une structure de ceinture (201), dans lequel le dispositif de mise en forme (12) comprend un bague de poussée (28) mobile dans une relation d'approche axiale par rapport au tambour de construction (3) et au moins une bague d'étanchéité (15) associée à ladite bague de poussée (28) et configurée pour agir par poussée contre un talon (103c) de ladite structure de carcasse (100), où ladite bague de poussée (28) comprend une pluralité de parties de contact annulaires (29a-29d) avec ladite au moins une bague d'étanchéité (15) qui sont concentriques et correspondent à des diamètres d'ajustement différents du pneu en cours de traitement, lesdites parties de contact annulaires (29a-29d) définissant une surface annulaire continue unique (30).

2. Appareil (1) selon la revendication 1, dans lequel la bague de poussée (28) est constituée d'un seul corps.

3. Appareil (1) selon la revendication 1 ou 2, dans lequel les parties de contact annulaires (29a-29d) s'étendent d'une extrémité radialement intérieure (31) à une extrémité radialement extérieure (32) de la bague de poussée (28).

4. Appareil (1) selon la revendication 3, dans lequel les parties de contact annulaires (29a-29d) sont formées sur une surface axialement intérieure (28a) de la bague de poussée (28).

5. Appareil (1) selon l'une quelconque des revendications précédentes, dans lequel le dispositif de mise en forme (12) comprend un corps de support annulaire (16) auquel la bague de poussée (28) est associée de manière coulissante.

6. Appareil (1) selon l'une quelconque des revendications précédentes, dans lequel le dispositif de mise en forme (12) comprend un corps d'entraînement annulaire (35) pour le mouvement axial de la bague de poussée (28), ledit corps d'entraînement annulaire (35) étant configuré pour agir par poussée contre un épaulement (28c) de la bague de poussée (28) axialement opposé aux parties de contact annulaires (29a-29d).

7. Appareil (1) selon la revendication 6 lorsqu'elle dépend de la revendication 5, dans lequel le corps d'entraînement annulaire (35) est mobile axialement vers et loin du corps de support annulaire (16) et dans lequel, facultativement, le dispositif de mise en forme (12) comprend au moins un élément élastique (38) agencé entre le corps d'entraînement annulaire (35) et le corps de support annulaire (16) et agissant à l'opposé de l'action de poussée du corps d'entraînement annulaire (35) sur la bague de poussée (28).

8. Appareil (1) selon l'une quelconque des revendications 5 à 7, dans lequel le dispositif de mise en forme (12) comprend au moins une broche (36) contrainte au corps d'entraînement annulaire (35) et à la bague de poussée (28), où, facultativement, le corps de support annulaire (16) comprend au moins un roulement à billes linéaire (37) traversé par ladite broche (36).

9. Appareil (1) selon l'une quelconque des revendications 5 à 8, dans lequel le dispositif de mise en forme (12) comprenant au moins un patin coulissant (33) agencé entre la bague de poussée (28) et le corps de support annulaire (16).

10. Appareil (1) selon la revendication 9, dans lequel ledit au moins un patin coulissant (33) comprend une bague respective concentrique à la bague de poussée (28) insérée dans un évidement annulaire respectif (34) formé sur une surface radialement intérieure (28b) de la bague de poussée (28).

11. Appareil (1) selon l'une quelconque des revendications précédentes, dans lequel ladite au moins une bague d'étanchéité (15) est constituée d'une bague d'étanchéité unique (15) ayant une extension radiale au moins égale à l'extension radiale de la bague de poussée (28) .

12. Appareil (1) selon la revendication 11, dans lequel la bague d'étanchéité (15) comprend une surface annulaire axialement extérieure (20) faisant face à ladite surface annulaire continue unique (30) et configurée pour agir dans une relation de contact avec ladite surface annulaire continue unique (30).

13. Appareil (1) selon l'une quelconque des revendications précédentes, dans lequel ladite bague de poussée (28) comprend quatre parties de contact annulaires radialement consécutives (29a, 29b, 29c, 29d), où la distance radiale entre une première paire de parties de contact annulaires consécutives est supérieure à la distance radiale entre toute autre paire de parties de contact annulaires consécutives.

14. Appareil (1) selon l'une quelconque des revendications 1 à 12, dans lequel ladite bague de poussée (28) comprend quatre parties de contact annulaires radialement consécutives (29a, 29b, 29c, 29d), où la distance radiale entre une paire de parties de contact annulaires radialement consécutives est égale à la distance radiale entre toute autre paire de parties de contact annulaires radialement consécutives.

15. Appareil (1) selon les revendications 11 et 14, dans lequel ladite bague d'étanchéité (15) comprend une surface annulaire axialement intérieure (19) qui s'étend selon une surface sensiblement tronconique.
